# EUROPEAN PATENT SPECIFICATION

(11) **EP 2 255 914 B1**
(45) Date of publication and mention of the grant of the patent: **23.05.2012**
(21) Application number: 09165379.0
(22) Date of filing: 14.07.2009
(51) Int. Cl.: B23K 7/10, B23K 10/00, B23K 26/08, B23K 26/42, B23K 37/04

(54) **Support Element for a Work or Cutting Bench for a Cutting Device**
Hilfselement für eine Arbeits- oder Schneidbank für eine Schneidvorrichtung
Élément de support pour établi ou table de découpe pour dispositif de découpe

(30) Priority: 28.05.2009 EP 09161371
(43) Date of publication of application: 01.12.2010
(73) Proprietor: BBM Buchmüller Metallwaren GmbH, 53604 Bad Honnef (DE)
(72) Inventor: Buchmüller, Jörg, 53604 Bad Honnef (DE)
(74) Representative: Koepe & Partner

(56) References cited:
- WO-A2-2009/027671
- US-A- 4 672 172
- US-A1- 2004 144 762

## Description

The invention relates to a support element for a work or cutting bench for a cutting device as claimed in claim 1, in particular for a cutting device configured for plasma, laser or flame cutting, for supporting a workpiece, wherein the support strip of the support element has a plurality of raised areas. In addition, the present invention relates to a sleeve and a pin for a support element for a work or cutting bench for a cutting device for supporting a workpiece and also a work or cutting bench for a cutting device equipped with such support elements for supporting a workpiece.

US 2004/0144762 A1 discloses a support element for cutting.

Conventional work or cutting benches for cutting installations generally have a frame, in the edge rails of which a plurality of substantially parallel support elements are fastened, and are known from practice. For example, upended parallel support elements with angled and toothed support edge are used, which are fastened laterally in a U-shaped profile. The overhead cutter of the cutting installation can be driven over the work bench and the workpiece located on the support elements can thus be cut. The overhead cutter is driven away from the work bench for loading and unloading the work bench. During loading the workpiece is laid on the support elements. The overhead cutter is then driven over the work bench again and the workpiece is cut by means of plasma, laser or flame cutting, for example. During this, the cut-out components generally remain on the support elements and can then be lifted and transported away using suitable devices.

Laser beam cutting devices of the said type are used, inter alia, to cut shaped pieces for pipes and sections that can have a wide variety of contours out of metal plates, metal sheets, metal foils etc. of different thickness and composition. Continuous path control of the cutting head allows a program-controlled operation, in which a plurality of component pieces can be produced from one sheet or one metal plate of predetermined size according to a predetermined division of the entire surface. During the cutting operation the cutting laser beam passes through the metal plate together with molten metal particles. If there are support elements located in the way of the cutting laser beam, then these come briefly into contact with the metal particles of the metal plate and the cutting laser beam. As a result of this, deposits of metal particles in the form of slag or scale are formed on the support elements.

Moreover, contamination occurs as a result of a reflection of the metal particles and scale onto the underside of the workpieces. These adhering residues must be removed from the shaped pieces, because these can be detrimental to the later use of the shaped pieces. In addition, the surface of the support elements is also partially melted and removed at the location that comes into contact with the cutting beam during the cutting operation. Since a uniform surface of the support elements is of decisive importance for alignment of the metal plate in order to ensure a precision cutting with the cutting beam, the support elements must be either cleaned or renewed if they have irregularities caused by fouling or material loss resulting from melting away. This is costly in terms of both time and material.

Special precautions are necessary when metal plates of alloyed steels, in particular stainless steel, are to be processed. This is associated with the fact that chromium-nickel steels in particular can suffer from a so-called rust infection upon contact with steels of a different composition. In conjunction with air humidity stainless steel can be locally attacked or destroyed by pitting as a result of this. To prevent this, normal support strips of sheet steel must not be used. Therefore, instead of the support elements with toothed support edge usually used for other cutting operations, upended support elements of copper or brass are used. However, such support elements are very costly.

Working from a laser beam cutting device of the aforementioned type, it is an object of the invention to provide support elements for work benches suitable for all types of cutting operations that arise and also to prevent contamination in the form of deposits of metal particles and scale on the shaped pieces and the support elements as far as possible.

The set object is achieved by the invention in that peg-shaped raised areas are provided on the upper edge of the support strips of the support elements arranged perpendicularly to the material plane of the metal plates to be cut, the upper support points of which raised areas form a level for receiving a workpiece. The resulting support on a plurality of individual points of the peg tips allows workpiece to be driven cleanly through the cutting device and substantially prevents fouling and scaling of the support.

The point-type support points mean that a deposit of metal particles, slag and scale on the support elements as well as a reflection of metal particles, slag and scale towards the underside of the workpieces are substantially prevented. Therefore, cleaning of the workpieces is no longer necessary or can be conducted with less expenditure.

A further advantage of this configuration is that the pins of the peg-shaped raised areas of the support elements can be partially replaced at the locations or in the areas, at/in which a deposit of metal particles, slag and scale has actually occurred, without requiring a complete replacement of the support elements, as is the case with conventional support elements. As a result, the material requirement for complete fitting of the work or cutting bench is significantly lower than in the previous configuration of support strips, and the necessary replacement can be achieved much more quickly.

Therefore, the present invention relates in particular to support elements for a work bench for a plasma or laser cutting device for supporting a workpiece, respectively comprising a support strip arranged perpendicular to the cutting plane, on the upper edge of which peg-shaped raised areas are provided, in accordance with patent claim 1. The peg-shaped raised areas of the support strip comprise a sleeve and a tapered pin. The lower end of the sleeve is fixedly and permanently connected to the support strip. Further preferred embodiments of the support elements according to the invention are evident from patent claims 4 to 16.

In addition, the present invention relates to a sleeve and/or a pin for a support element for a plasma or laser cutting device for supporting a workpiece according to patent claim 12 or 13.

The present invention also relates to a work bench for a plasma or laser cutting device for supporting a workpiece that comprises a plurality of support elements according to the invention.

The present invention relates to the use of such support element according to claim 15.

The invention shall be explained in more detail below with reference to the embodiments shown in the figures:
- Figure 1: shows a perspective partial view of the work bench according to the invention for a plasma or laser cutting device;
- Figure 2: is a front view of a support strip without peg-shaped raised areas;
- Figure 3: is a front view of a further embodiment of the support strip without peg- shaped raised areas;
- Figure 4: is a front view of an embodiment of a support strip before assembly of the peg-shaped raised areas;

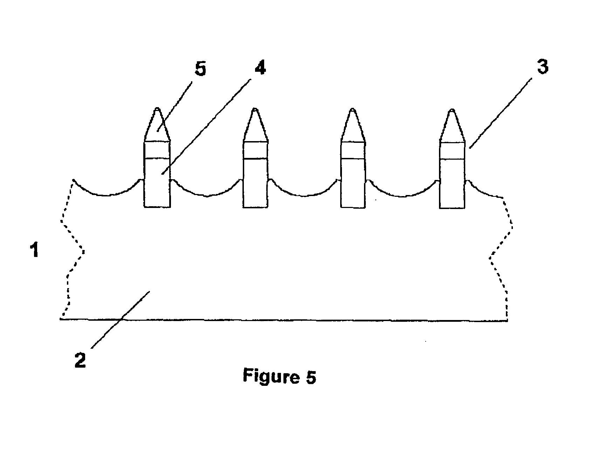

- Figure 5: is a front view of an embodiment of a support strip after assembly of the peg- shaped raised areas;
- Figure 6: is a detailed representation of the different embodiments of the sleeves and pins.

The term "support element" as used in the present description and in the patent claims is understood to mean the metal element arranged perpendicularly, i.e. at a right angle to the cutting plane of the material, in a frame on the work or cutting bench. In the prior art and also according to the invention a plurality, e.g. 25 to 30, support elements are arranged parallel to one another or staggered in stable position, but to be removable and therefore replaceable.

The term "support strip" as used in the present description and in the patent claims is understood to mean the section of the support element arranged on the upper edge, i.e. on the workpiece side edge. This section was a part of the support element in the prior art, but was regularly subject to intense wear during the welding process. According to the invention, the support strip serves to fasten the sleeves and is therefore the support of the pins, on which the workpiece to be subjected to the cutting process lies during the plasma, laser or flame-cutting operation.

The term "peg-shaped raised areas" as used in the present description and in the patent claims is understood to mean the combination of a sleeve and a pin.

The term "sleeve" as used in the present description and in the patent claims is understood to mean the metal element, which is regularly present in the form of an open cylinder with a circular diameter, is placed on the support strip and serves to hold a pin to be defined below, several of which jointly support the workpiece during the cutting process.

The term "pin" as used in the present description and in the patent claims is understood to mean the metal pin to be attached onto the sleeve in stable position, but to be removable and therefore replaceable. A plurality of pins support the workpiece to be cut. In order to allow quick replacement, the pins must fit exactly into the sleeves provided to hold them, but must also be exactly dimensioned so as not to pose a risk to a clean, i.e. level, support of the workpiece to be cut, e.g. a metal plate, that must always be kept at the same distance from the laser cutting beam.

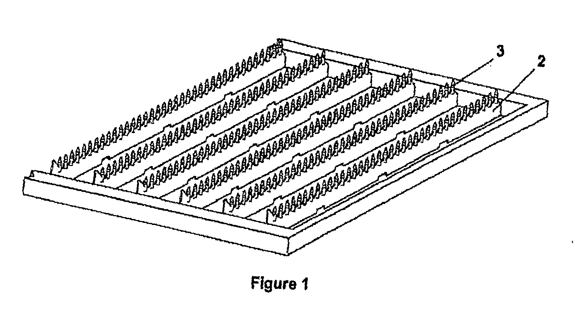

The work bench or cutting bench according to the invention in Figure 1 comprises a frame, into which a multiplicity of support elements 1 are inserted in stable position, but to be replaceable. The frame itself comprises a left and a right edge rail that serve to replaceably hold support elements 1. Alternatively to this (not shown), the support elements ] can be replaceably fastened to the upper side of the work bench or cutting bench in holding rails, e.g. in the form of U profiles or by means of a square hollow bar. The support elements 1 are arranged on the work bench or cutting bench at parallel distances from one another at a right angle to the cutting plane.

The support elements 1 of the work or cutting bench according to the invention comprise a support strip 2 and a plurality of peg-shaped raised areas 3, which are fastened on the support strip perpendicularly to the upper edge of the support strip. In this case, the peg-shaped raised areas 3 form a level, which forms the workpiece support and on which the workpiece to be machined is laid. In general, the support strip 2 is made of a steel sheet with a thickness of about 2 to 4 mm. Steel sheets with a thickness of 3 mm are preferred. Steel is advantageously used as material for the support strip 2, and steel with the designation ST37, SJ235 is further preferred. However, in addition, all stainless steels can also be used.

The upper edge of the support strip 2 is advantageously straight in order to ensure a uniform level for assembly of the peg-shaped raised areas 3 and thus an alignment of the workpieces for a precise cutting operation.

The upper edge of the support strip 2 of the support elements 1 according to the invention is provided with a multiplicity of peg-shaped raised areas 3, the upper tips of which jointly provide a level of the workpiece support. The number of peg-shaped raised areas on each support strip or the spacing of the peg-shaped raised areas on each support strip 2 is primarily dependent on the size and weight of the workpieces to be machined. For example, smaller workpieces to be cut out require a higher density of the peg-shaped raised areas, so that the cut out components remain in place on the support elements 1 after the cutting operation and do not drop into the space between the support elements. In the case of larger components, the spacing between the peg-shaped raised areas can be larger. In certain cutting tasks support elements 1 can also be used that have peg-shaped raised areas 2 with different spacings over the length of the support strip 2. The spacing of the peg-shaped raised areas 3 preferably lies in the range of 30 to 40 mm. Advantageously, the spacing amounts to about 38 mm, for example.

Comparable to a bed of nails, the support elements 1 according to the invention are able to take the same load of a steel plate lying thereon as conventional support elements. As a result of the reduced contact surface of the peg-shaped raised areas 3 with the workpiece, the support strips come into contact with the cutting beam and the molten metal particles less frequently during the cutting operation, and therefore deposits of metal particles, slag and scale on the support strips are reduced. The reduced contact surface of the peg-shaped raised areas with the workpiece has the additional advantage that a reflection of metal particles and scale towards the underside of the workpieces is substantially prevented.

The peg-shaped raised areas 3 of the support elements 1 according to the invention respectively comprise a sleeve 4 and a tapered pin 5. In a preferred embodiment of the invention, the sleeve 4 is fastened to the upper edge of the support strip 2 at its lower end. Fastening is advantageously achieved by welding. However, other types of fastening that allow a fixed and permanent connection between the upper edge of the support strip 2 and the sleeve 4 are also possible. The tapered pin 5 and the sleeve 4 are fixedly connected to one another by a plug mechanism or a screw mechanism, as will be described in more detail below.

In a particularly preferred embodiment, the tapered pin 5 is replaceable.

While the support elements 1 according to the invention give less cause for deposits than conventional support elements, deposits in the region of the upper surface of the workpiece support, namely at the peg-shaped raised areas 3, are not completely avoidable after a certain number of cutting operations. The advantage of the design of the support elements according to the invention is that the pins 5 of the peg-shaped raised areas 3 can be selectively replaced at the locations or in the areas, at/in which deposits have occurred. This has the advantage that a complete replacement of the support elements 1 is not necessary, as is the case in conventional support elements that have contaminated and melted-away support point.

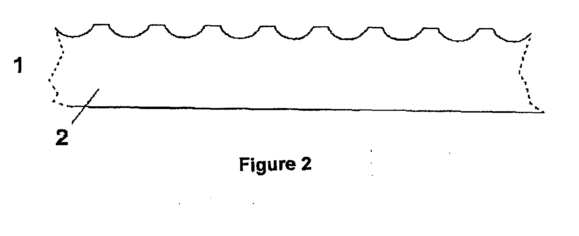

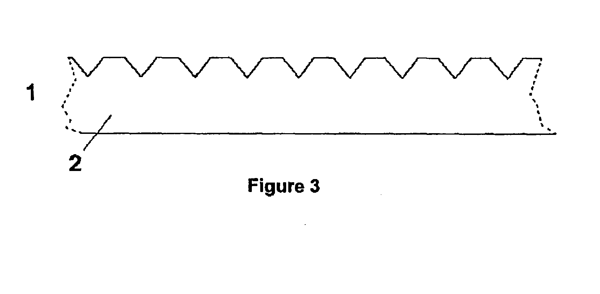

In a preferred embodiment, the upper edge of the support strip 2 has U-shaped or V-shaped cut-outs, as may be seen in Figures 2 and 3. This cut-outs are separated from one another by straight areas. Such cut-outs have the advantage that the support strips 2 do not come into direct contact with the cutting beam and the molten metal particles of the steel plates to be cut in the region of these cut-outs during the cutting operation, and this reduces the deposits of metal particles, slag and scale on the support strips 2. The spacing of the contact points, at which residues from the cutting operation are reflected, are also reduced as a result of the cut-outs, so that a reflection of metal particles, slag and scale towards the underside of the workpieces is reduced.

The length or dimensioning of the U-shaped or V-shaped cut-outs depends on how many peg-shaped raised areas 3 are fastened to each support strip 2.

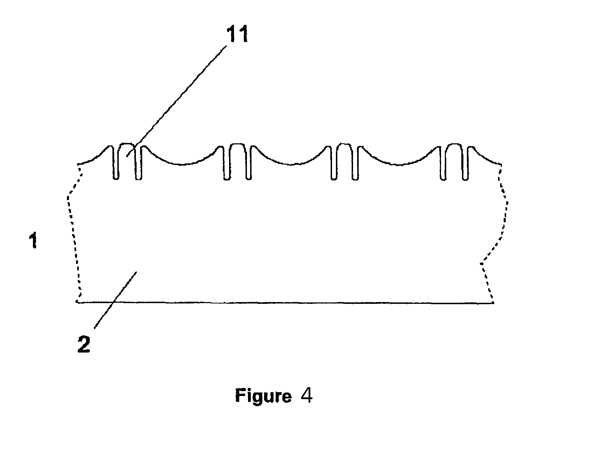

For a stable and permanent fastening of the sleeves 4 to the support strip 2, the support strip 2 is preferably provided with two uniform incisions 12 arranged parallel to one another in the straight regions between the U-shaped or V-shaped cut-outs, as is illustrated in Figure 4. In this case, the spacings between adjacent incisions 12 are matched to one another so that their dimension corresponds to the inside diameter of the sleeve 4. The width of the incisions is in turn dimensioned so that it corresponds to the thickness of the sleeve wall. The thickness of the sleeve wall lies in the range of 2 to 4 mm. Advantageously, the thickness of the sleeve wall lies in the range of 2 to 3 mm. Most preferred, the thickness of the sleeve wall amounts to 2.2 mm. The inside diameter of the sleeve 4 lies in the range of 4 to 8 mm, preferably in the range of 5 to 7 mm. Advantageously, the inside diameter of the sleeve 4 amounts to about 6 to 6.5 mm, for example.

For a stable and permanent fastening of the sleeves 4 to the support strip 2, the sleeve is inserted at its lower opening 6 into the two incisions 12 as far as the stop or is placed over the, between the [?] web 13 of the support strip 2 formed by the two incisions. The sleeves are then permanently fastened at their lower edge to both side walls of the support strip 2 by welding, for example.

In an alternative embodiment, the sleeve 4 does not have a lower opening at its lower end, but is closed in this region. In this embodiment, for the purpose of fastening to the support strip 2, the sleeve is provided with an incision over its cross-section that is dimensioned with respect to its width and height so that this corresponds to the thickness of the support strip 2 and in attached state the sleeve 4 receives the support strip in the region of the incision. In this embodiment, the sleeve 4 is placed on the support strip 2 as far as the stop in the incision and is fastened to both side walls of the support strip 2 by welding at its lower edge, as in the previously described embodiment.

The two previously described embodiments of the sleeve 4 have the advantage that the peg-shaped raised areas 3 are connected to the support strip 2 in a stable and permanent manner and do not bend even when loaded by heavy steel plates.

The tapered pin 5 is fastened to the upper end of the sleeve 4 by a plug or screw mechanism, e.g. in the form of a thread or by a bayonet closure, as will be explained in detail below.

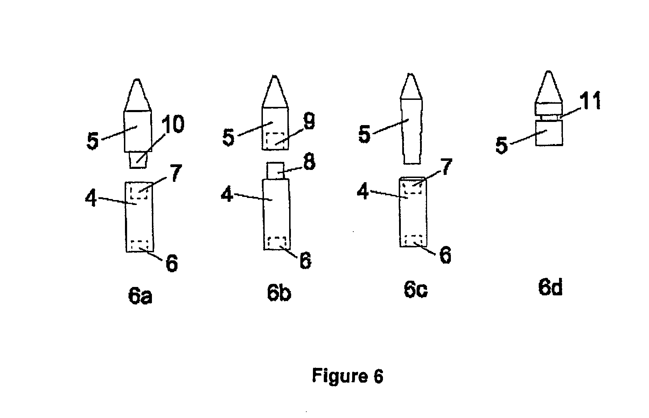

The different modifications of the sleeves 4 as well as the tapered pins 5, which together form the peg-shaped raised areas 3, will now be explained in more detail on the basis of Figure 6.

According to the invention, the sleeves 4 are made from the same material as the support strips, namely of steel with the designation ST37, SJ235, for example. However, besides these, all stainless steels can also be used such as chromium-nickel steel, e.g. with the designation 1.4301.

However, the pins 5 are produced from a material that is compatible with all materials that are to be machined, in particular in the machining of sheets of alloyed steels, e.g. stainless steel. This is associated with the fact that chromium-nickel steels in particular can suffer from a so-called rust infection upon contact with steels of a different composition as a result of ferritic inclusions. In conjunction with air humidity stainless steel can be locally attacked or destroyed by corrosion as a result of this. Therefore, to prevent this the pins 5 are made from chromium-nickel steel, e.g. with the designation 1.4301, and advantageously from copper. Copper pins are preferably used.

Moreover, the use of pins 5 made of the abovementioned materials that are compatible with all materials to be machined has the advantage that when cutting chromium-nickel steel plates it is no longer necessary to replace the sheet steel support elements used for other cutting operations with support elements that have hitherto been made completely of copper for this purpose, and this saves time as well as substantial material costs.

The copper pins 5 are produced either by turning or stamping. The latter method of production has the advantage that pin produced in this way have a better stability and are less easily deformed when loading the work bench or cutting bench and also by the weight of the steel plates to be cut, since the copper material is compacted during this production process. In a preferred embodiment, the tip of the pins 5 is slightly rounded.

The sleeves 4 preferably have a round shape. However, the sleeves can also be polygonal. The tapered pins 5 preferably have the shape of a straight cone or a truncated cone. However, the shape of a straight cone is preferred to minimise the support surface with the workpiece to be machined and thus minimise the likelihood of the cutting beam coming into contact with the support element and its peg-shaped raised areas. Alternatively, a conical shape with a polygonal cross-section is also possible.

Various modifications are possible for fastening the pins 5 to the sleeve 4.

In an embodiment of the peg-shaped raised area 3, as illustrated in Figure 6, the sleeve 4 has an opening 7 on its upper end. This opening 7 can have either a uniform diameter or the shape of a cone. On its lower surface remote from the tip the pin 5 corresponding to this embodiment has a peg 10 that has a uniform diameter or a peg with a conical shape, the course of which corresponds to the course of the opening 7 of the sleeve 4. The diameter and length of the opening 7 of the sleeve 4 and also the diameter and length of the peg 10 of the pin 5 are matched to one another with respect to their dimensions such that the peg 10 of the pin 5 fits into the opening 7 at the upper edge of the sleeve 4. For fastening the peg 10 of the pin is inserted into the opening 7 of the upper end of the sleeve 4 and then firmly tapped or pressed into place. A stable fastening of the pin 5 in the opening 7 of the sleeve 4 is assured both by the pressure and the ductility of the copper material of the pin 5.

In contrast, as represented in Figure 6b, in a further embodiment of the peg-shaped raised area 3 the sleeve 4 does not have an opening, i.e. is not hollow, at its upper end and instead has a peg 8 with a uniform diameter or a peg with a conical shape. On its lower surface remote from the tip, the pin 5 corresponding to this embodiment has a central opening 9, which has either a uniform diameter or the shape of a cone. The peg 8 of the sleeve 4 corresponds to the course of the opening 9 of the pin 5. The diameter and length of the opening 9 of the pin 5 as well as the diameter and length of the peg 8 of the sleeve 4 are matched to one another with respect to their dimensions such that the peg 8 of the sleeve 4 fits into the opening 9 on the lower surface of the pin 5 remote from the tip. For fastening the opening 9 of the pin is placed onto the peg 8 of the sleeve 4 and the pin is firmly tapped or pressed into place. A stable fastening of the pin 5 to the sleeve 4 is assured both by the pressure and the ductility of the copper material of the pin 5.

In a further embodiment, as represented by Figure 6c, the pin 5 is configured so that it tapers conically towards its lower end, i.e. towards the surface remote from the tip. In this embodiment, the sleeve 4 has an opening 7 at its upper end. This opening 7 has the shape of a cone, the course of which corresponds to the course of the conical part of the lower end of the pin 5. The diameter and length of the opening 7 of the sleeve 4 as well as the diameter and length of the conical end of the pin 5 are matched to one another with respect to their dimensions such that the conical end of the pin 5 fits into the opening 7 at the upper end of the sleeve 4. For fastening the lower end of the pin 5 is inserted into the opening 7 of the upper end of the sleeve 4 and then firmly tapped or pressed into place. A stable fastening of the pin 5 in the opening 7 of the sleeve 4 is assured both by the pressure and the ductility of the copper material of the pin 5. A clear advantage with this embodiment can be to incline the upper edge of the sleeve slightly outwards, as evident from Figure 6c, because particles striking against these sloping surfaces during the cutting operation are thus reflected at an angle and do not directly strike against the underside of the steel plates to be machined.

Alternatively to the aforementioned embodiments, the sleeve 4 and the pin 5 can be connected to one another by means of a thread. In this embodiment, for example, the opening 7 of the sleeve 4 is configured as an internal thread and the peg 10 of the pin 5 is configured as an external thread, or the opening 9 of the pin 5 is configured as an internal thread and the peg 8 of the sleeve 4 is configured as an external thread.

In a further alternative embodiment, the sleeve 4 and the pin 5 can be connected to one another by means of a bayonet closure via their openings 7 and 9 respectively and their pegs 8 and 10 respectively. Bayonet closures are known in various embodiments from the prior art. In general, bayonet closure refers to a device for connecting two parts, in particular rods, sleeves, pipes, in an easily releasable manner in the direction of their longitudinal axis. One (male) part has raised areas or pegs at its end that are inserted into recesses, slots or grooves in the other (female) part and are moved as far as a stop by rotating in an annular slot or an annular groove. In another embodiment, the bayonet closure consists of a cylindrical shaft with radial projections or raised areas that cooperate with a tube connection piece with inwardly directed radial projections or raised areas. In this case, the projections or raised areas are spaced so far apart when viewed in circumferential direction that the radial projections of the mating part of the bayonet closure can engage into these spaces, so that in a specific position of rotation both parts are axially displaceable relative to one another. In the fully engaged position, the two elements are rotatable relative to one another, so that the projections of both elements come to lie one behind the other and prevent axial displacement of the elements relative to one another.

The sleeve 4 has a length in the range of 15 to 50 mm, preferably in the range of 25 to 40 mm, more preferred in the range of 30 to 35 mm. The sleeve 4 preferably has a length of 32 mm, for example.

The sleeve 4 has an outside diameter in the range of 8 to 14 mm, preferably in the range of 9 to 13 mm. It is even more preferred if the sleeve 4 has an outside diameter in the range of 10 to 12 mm.

The pin 5 has a total length in the range of 15 to 35 mm, preferably in the range of 20 to 30 mm. It is even more preferred if the pin has a length of 24 mm, for example.

The inside diameter of the upper opening 7 of the sleeve 4 and also the inside diameter of the lower opening 9 of the pin 5 lie in the range of 4 to 8 mm, preferably in the range of 5 to 7 mm. It is most preferred if the inside diameter is in the range of 5 to 7 mm. Advantageously, the outside diameter of the upper opening 7 of the sleeve 4 and also of the lower opening 9 of the pin 5 are 6.6 mm, for example. Corresponding hereto, the outside diameter of the pegs 8, 10 of the sleeve and the pin are in the range of 4 to 8 mm, preferably in the range of 5 to 7 mm. It is most preferred if the outside diameter is in the range of 5 to 7 mm. Advantageously, the outside diameter of the pegs 8, 10 of the sleeve and the pin is 6.6 mm, for example.

The length of the upper opening 7 of the sleeve 4 and also the length of the lower opening 9 of the pin 5 lie in the range of 4 to 8 mm, preferably in the range of 5 to 7 mm. Advantageously, the length is 6 mm, for example. Corresponding hereto, the length of the pegs 8, 10 of the sleeve and the pin is in the range of 4 to 8 mm, preferably in the range of 5 to 7 mm. Advantageously, the length of the pegs 8, 10 of the sleeve and the pin is 6 mm, for example.

In the embodiments with conical openings or conical pegs of the sleeve 4 or the pin, the cone preferably has a diameter of 6.6 mm with a taper of 5° on a length of 6 mm.

As already explained above, the pin 5 is preferably replaceable. In order to enable easier replacement of the pin, the pin is provided on its outer surface with a groove that runs parallel to the lower edge of the pin 5, as shown in Figure 6d. The advantage of such a groove is that contaminated or damaged pins can be more easily pulled out of the sleeve and removed by means of suitable tools, e.g. pliers or extraction aids specially designed for this purpose that engage into the groove, to be replaced with clean or new pins.

Alternatively, the sleeve 4 and the pin 5, in particular the opening and peg thereof, are matched to one another such that after the pin is fastened on the sleeve a space or gap is formed between the two parts. The purpose of the space or gap is to allow contaminated or damaged pins to be more easily pulled out of the sleeve and removed by means of suitable tools that engage into the space or gap to be replaced with clean or new pins.

### Reference Numerals:

- 1: support element
- 2: support strip
- 3: peg-shaped raised areas
- 4: sleeve
- 5: pin
- 6: lower opening of sleeve
- 7: upper opening of sleeve
- 8: peg of pin
- 9: lower opening of pin
- 10: peg of pin
- 11: groove of pin
- 12: incisions of support strip
- 13: web

## Claims

1. Support element (1) for a work bench for a plasma or laser cutting device for supporting a workpiece, comprising a support strip (2) arranged perpendicular to the cutting plane, **characterised in that** peg-shaped raised areas (3) are provided on the upper edge of the support strip (2), wherein a peg-shaped raised area (3) comprises a sleeve (4) and a tapered pin (5), wherein the lower end of the sleeve (4) is fastened to the upper edge of the support strip (2).

2. Support element (1) according to claim 1, wherein the sleeve (4) and the tapered pin (5) are connected to one another by a plug mechanism or a screw mechanism.

3. Support element (1) according to claim 1 or claim 2, wherein the pin (5) is replaceable.

4. Support element (1) according to one of claims 1 to 3, wherein the sleeve (4) has a lower and an upper opening (6, 7).

5. Support element (1) according to one of claims 1 to 3, wherein the pin (5) has a central opening (9) on its lower face remote from the tip.

6. Support element (1) according to one of claims 1 to 3, wherein the end of the pin (5) remote from the tip has a peg (10), or wherein the upper end of the sleeve (4) has a peg (8).

7. Support element (1) according to claim 6, wherein the peg (10) of the pin (5) or the peg (8) of the sleeve (4) has a conical course.

8. Support element (1) according to one of claims 1 to 7, wherein the sleeve (4) is made of steel and/or wherein the pin (5) is made of copper.

9. Support element (1) according to one of claims 1 to 8, wherein the sleeve (4) is round or polygonal.

10. Support element (1) according to one of claims 1 to 9, wherein the pin (5) has a conical shape.

11. Support element (1) according to one of claims 1 to 10, wherein the pin (5) comprises a groove (12) parallel to its lower end.

12. Sleeve as defined in one of the preceding claims 1 to 11.

13. Pin as defined in one of the preceding claims 1 to 11.

14. Work bench for a plasma or laser cutting device for supporting a workpiece comprising a plurality of support elements as claimed in one of claims 1 to 11.

15. Use of a support element as claimed in one of claims 1 to 11 in a work bench for a plasma or laser cutting device for supporting a workpiece.

## Patentansprüche

1. Auflageelement (1) für einen Arbeitstisch für eine Plasma- oder Laser-Schneidevorrichtung zur Auflage eines Werkstücks, welches eine senkrecht zur Schneideebene angeordnete Trageleiste (2) aufweist, **dadurch gekennzeichnet, dass** an der Oberkante der Trageleiste (2) stiftförmige Erhebungen (3) vorgesehen sind, wobei eine stiftförmige Erhebung (3) eine Hülse (4) und einen spitz zulaufenden Pin (5) aufweist, wobei das untere Ende der Hülse (4) an der Oberkante der Trageleiste (2) befestigt ist.

2. Auflageelement (1) nach Anspruch 1, wobei die Hülse (4) und der spitz zulaufende Pin (5) durch einen Steckmechanismus oder einen Schraubmechanismus miteinander verbunden sind.

3. Auflageelement (1) nach Anspruch 1 oder 2, wobei der Pin (5) auswechselbar ist.

4. Auflageelement (1) nach einem der Ansprüche 1 bis 3, wobei die Hülse (4) eine untere und eine obere Öffnung (6, 7) aufweist.

5. Auflageelement (1) nach einem der Ansprüche 1 bis 3, wobei der Pin (5) an seiner unteren, der Spitze abgewandten Fläche eine zentral gelegene Öffnung (9) aufweist.

6. Auflageelement (1) nach einem der Ansprüche 1 bis 3, wobei das der Spitze abgewandte Ende des Pins (5) einen Stift (10) aufweist oder wobei das obere Ende der Hülse (4) einen Stift (8) aufweist.

7. Auflageelement (1) nach Anspruch 6, wobei der Stift (10) des Pins (5) oder der Stift (8) der Hülse (4) einen konischen Verlauf aufweisen.

8. Auflageelement (1) nach einem der Ansprüche 1 bis 7, wobei die Hülse (4) aus Stahl besteht und/oder wobei der Pin (5) aus Kupfer besteht.

9. Auflageelement (1) nach einem der Ansprüche 1 bis 8, wobei die Hülse (4) rund oder mehreckig ist.

10. Auflageelement (1) nach einem der Ansprüche 1 bis 9, wobei der Pin (5) eine Kegelform aufweist.

11. Auflageelement (1) nach einem der Ansprüche 1 bis 10, wobei der Pin (5) parallel zu seinem unteren Ende eine Nut (12) aufweist.

12. Hülse, wie in einem der vorangehenden Ansprüche 1 bis 11 definiert.

13. Pin, wie in einem der vorangehenden Ansprüche 1 bis 11 definiert.

14. Arbeitstisch für eine Plasma- oder Laser-Schneidevorrichtung zur Auflage eines Werkstücks, umfassend mehrere Auflageelemente, wie in einem der Ansprüche 1 bis 11 beansprucht.

15. Verwendung eines Auflageelements, wie in einem der Ansprüche 1 bis 11 beansprucht, in einem Arbeitstisch für eine Plasma- oder Laser-Schneidevorrichtung zur Auflage eines Werkstücks.

## Revendications

1. Élément support (1) pour un banc de travail pour un dispositif de coupe au plasma ou au laser pour supporter une pièce à travailler, comprenant une bande support (2) agencée perpendiculairement au plan de coupe, **caractérisé en ce que** des zones surélevées en forme de tenon (3) sont prévues sur le bord supérieur de la bande support (2), dans lequel une zone surélevée en forme de tenon (3) comprend un manchon (4) et une cheville conique (5), dans lequel l'extrémité inférieure du manchon (4) est fixée au bord supérieur de la bande support (2).

2. Élément support (1) selon la revendication 1, dans lequel le manchon (4) et la cheville conique (5) sont connectés l'un à l'autre par un mécanisme à fiche ou un mécanisme à vis.

3. Élément support (1) selon la revendication 1 ou la revendication 2, dans lequel la cheville (5) est remplaçable.

4. Élément support (1) selon l'une des revendications 1 à 3, dans lequel le manchon (4) a une ouverture inférieure et une ouverture supérieure (6, 7).

5. Élément support (1) selon l'une des revendications 1 à 3, dans lequel la cheville (5) a une ouverture centrale (9) sur sa face inférieure distante de la pointe.

6. Élément support (1) selon l'une des revendications 1 à 3, dans lequel l'extrémité de la cheville (5) distante de la pointe a un tenon (10), ou dans lequel l'extrémité supérieure du manchon (4) a un tenon (8).

7. Élément support (1) selon la revendication 6, dans lequel le tenon (10) de la cheville (5) ou le tenon (8) du manchon (4) a une course conique.

8. Élément support (1) selon l'une des revendications 1 à 7, dans lequel le manchon (4) est constitué d'acier et/ou dans lequel la cheville (5) est constituée de cuivre.

9. Élément support (1) selon l'une des revendications 1 à 8, dans lequel le manchon (4) est rond ou polygonal.

10. Élément support (1) selon l'une des revendications 1 à 9, dans lequel la cheville (5) a une forme conique.

11. Élément support (1) selon l'une des revendications 1 à 10, dans lequel la cheville (5) comprend une rainure (12) parallèle à son extrémité inférieure.

12. Manchon selon l'une des revendications précédentes 1 à 11.

13. Cheville selon l'une des revendications précédentes 1 à 11.

14. Banc de travail pour un dispositif de coupe au plasma ou au laser pour supporter une pièce, comprenant une pluralité d'éléments supports selon l'une des revendications 1 à 11.

15. Utilisation d'un élément support selon l'une des revendications 1 à 11 dans un banc de travail pour un dispositif de coupe au plasma ou au laser pour supporter une pièce.
